(19) Europäisches Patentamt
European Patent Office
Office européen des brevets

(11) EP 1 288 861 A2

(12) **EUROPEAN PATENT APPLICATION**

(43) Date of publication:
**05.03.2003 Bulletin 2003/10**

(51) Int Cl.[7]: **G06T 7/00**

(21) Application number: **02018184.8**

(22) Date of filing: **19.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **20.08.2001 JP 2001249199**

(71) Applicant: **FUJI PHOTO FILM CO., LTD.
Kanagawa-ken, 250-01 (JP)**

(72) Inventors:
- **Takeo, Hideya, Fuji Photo Film Co., Ltd. Ashigarakami-gun, Kanagawa-ken (JP)**
- **Imamura, Takashi, Fuji Photo Film Co., Ltd. Ashigarakami-gun, Kanagawa-ken (JP)**

(74) Representative: **Klunker . Schmitt-Nilson . Hirsch
Winzererstrasse 106
80797 München (DE)**

(54) **Detection of anomalous shadow in digital image**

(57) An anomalous shadow detection apparatus for detecting within an image the shadows cast by microcalcifications of various characteristics, wherein the detection performance is improved. An ultrafine structures image forming means forms an ultrafine structures image data from the image data of a target subject (mammary glands) that has been inputted thereto. A microcalcifications enhanced image obtaining means forms two microcalcifications enhanced image data, by use of two matched filters (form dependent filters), from the formed ultrafine structures image data that has been inputted thereto. The formed ultrafine structures image data and the two microcalcifications enhanced image data are inputted to a detecting means. Based on the image data inputted thereto, the detecting means detects, utilizing the detection threshold value set for each image data, the microcalcification shadows within the image represented by the target subject image data.

EP 1 288 861 A2

## Description

BACKGROUND OF THE INVENTION

Field of the Invention

The present invention relates to an apparatus for detecting anomalous shadows, and in particular to an anomalous shadow detection apparatus for detecting shadows of microcalcifications within an image.

Description of the Related Art

In the field of medicine, recent years have seen widespread use of Computed Radiography (CR) systems replacing the use of radiation images in diagnostic procedures. Typically, CR systems temporarily store a radiation image on a stimulable phosphor sheet (an imaging plate) , then irradiate the stimulable phosphor sheet with an excitation light and photoelectrically read out the stimulated emission, which is a quantity of light corresponding to the radiation image stored on the irradiated sheet, to obtain an electric signal (an image signal). The obtained electric signal is then digitized to obtain image data, and a visible image (a radiation image) based on the obtained image data is printed to film, outputted to a monitor and displayed, etc. Because these CR systems employ stimulable phosphor sheets capable of maintaining the linearity of the quantity of radiation and the quantity of stimulated emission over a wide range, practical advantages such as the ability to discriminate the fine fluctuations in concentration of an image and the like are obtained in comparison to the case in which a radiation image is directly recorded to film, and because the image signal is digitized, it is easy to perform various types of image processes on the image data.

Further, according to CR systems, in order for the image to be reproduced based on the image data obtained from the main readout of the image signal from the stimulable phosphor sheet having optimal concentration, contrast for the diagnostic reading thereof to be performed, a preread process, wherein an excitation light of a lower intensity than that used in the main readout is scanned over the sheet to obtain a rough reading of the image data that has been stored on the sheet is performed before the main readout. The readout conditions of the main readout, including the readout sensitivity (hereinafter referred to as the S value), the latitude (hereinafter referred to as the L value) are set by use of "readout sensitivity and contrast adjusting functions", which are collectively referred to as an Exposure Data Recognizer (EDR), according to the data obtained from the preread. The readout sensitivity and contrast adjusting functions are processes for canceling out the differences in the environmental conditions, including the image obtaining conditions under which an image is obtained, the readout conditions under which an image is photoelectrically read out, etc., and ensuring that the image to be reproduced is capable of being reproduced so as to be of optimal concentration, contrast and the like. These processes are generally referred to as standardizing processes or normalizing processes . Further, standardizing processes such as those performed by the EDR are not limited to being employed in CR systems, but are also applicable to medical images obtained by medical image forming apparatuses such as CT apparatuses, MRI apparatuses and the like.

Although the EDR described above first optimizes the readout conditions by performing a preread, and then performs the main read out, there are EDR that forego the preread step so as to prevent the loss of time and avoid the concomitant complexity of the apparatus required therefor.

These refer to, as described in Japanese Unexamined Patent Publication No. 2(1990)-108175, etc., the processing is a signal process, wherein: after a sufficient detection range for an assumed quantity of light of the stimulated emission has been ensured for in advance (e.g., on the order of four digits), the entire image is read out and image data thereof obtained; then the optimal readout sensitivity and latitude are obtained from the image data; then the image data is converted, based on the optimal readout sensitivity and latitude obtained therefrom, to image data of an equivalent value as that obtained at the optimal readout sensitivity and latitude. According to the above-described process, because it is possible to obtain the image data required for optimal image reproduction by use of only a computational process, it is not necessary to reset the excitation light quantity, sensitivity, dynamic range, and the like of the photoelectrical readout means. Therefore, this type of EDR is that most commonly employed.

In the field of medical radiology, the diagnostic reading of radiation images in order to discover the location of a disease, or to observe the state of a diseased tissue in order to determine the presence or absence of disease or the course of a disease is widely practiced. However, the results and reliability of such diagnosis depends largely on the experience and skill level of a diagnostician, and is by no means a purely objective measure.

Take for example a case in which a mammogram (a diagnostic radiation image of the mammary glands) is obtained for the purpose of diagnosing whether or not breast cancer is present. It is necessary to detect the anomalous shadows contained therein that have been cast by tumors and microcalcifications, which are indicative of breast cancer. However, it is not a forgone conclusion that the diagnostician will be able to correctly specify the exact range defining such anomalous shadows. Therefore, an objective and reliable method and system for detecting anomalous shadows, starting with the shadows of tumors and microcalcifications, which is not dependent on the skill level of the diagnostician, is called for.

In response to this need, with the objective of taking advantage of the excellent properties of the above described CR systems for use in medical diagnosis, anomalous shadow detection systems (computer assisted image diagnostic apparatuses) have been proposed that automatically detect, based on the image data of a target subject that has been obtained as a diagnostic image, suspected anomalous shadows within the image represented by said image data, by use of a computer (see, e.g., Japanese Unexamined Patent Publication Nos. 8(1996)-294479, 8(1996)-287230, etc.). By use of a computer, such anomalous shadow detection systems employ iris filtering processes, used mainly in the detection of shadows suspected of being cast by tumors, and morphology filtering process, used mainly for detecting shadows suspected of being cast by microcalcifications, to automatically detect suspected anomalous shadows within an image.

A morphology filtering process is an effective means of detecting shadows cast by microcalcifications within an image, which are an indicator of breast cancer, and comprises the steps of: obtaining an output value based on a morphology computation employing a plurality of structuring elements that are larger than the shadows of the microcalcifications; and comparing the obtained output value to a predetermined threshold value to detect the suspected anomalous shadows.

However, for cases in which a morphology filtering process is used to detect the shadows of microcalcifications within an image, because it is in principle impossible to eliminate from the image structures of a size smaller than the structuring elements or linear components of a directionality differing from the structuring elements, such structures and linear components become a major cause of mistaken detections. Further, it is difficult to detect shadows of microcalcifications that are not clear, that span an area containing a plurality of pixels, etc., using a morphology filtering process.

As a means to remedy these problems, there has been proposed, in Japanese Unexamined Patent Publication No. 2002-99896, a method of improving the accuracy of detecting the shadows of microcalcifications, wherein; a microcalcification enhancing process employing a matched filter (a form dependent filter) capable of enhancing and highlighting the shadows of microcalcifications within the ultrafine structures image (an image which represents the extracted suspected microcalcification shadows) formed during the process of detecting microcalcifications shadows by use of a morphology filtering process. According to this method, by selecting from various types of matched filters a filter having the desired characteristics (e.g., form, concentration distribution), it becomes possible to enhance, corresponding to the characteristics of the selected matched filter, the unclear shadows of microcalcifications or the shadows of nonlinear microcalcifications, and to relatively suppress noise and the like. As a result, the accuracy in detecting shadows of microcalcifications of the desired characteristics can be improved.

Meanwhile, because it is likely that shadows of microcalcifications of a variety of characteristics, such as unclear shadows of microcalcifications, shadows of nonlinear microcalcifications and the like will be included in an image, it is desirable that all of the shadows of microcalcifications be detected, regardless of the specific characteristics of each.

## SUMMARY OF THE INVENTION

The present invention has been developed in view of the forgoing circumstances, and it is an objective of the present invention to provide an anomalous shadow detection apparatus capable of detecting shadows of microcalcifications having a variety of characteristics, and improving the detection performance thereof.

The anomalous shadow detection apparatus according to the present invention is an anomalous shadow detection apparatus for detecting, based on the image data of a subject image that is to be the object of processing, the microcalcification shadows within the subject image, comprising: an ultrafine structures image obtaining means for obtaining an ultrafine structures image representing the ultrafine structures appearing in a subject image; a microcalcifications enhanced image obtaining means for subjecting the obtained ultrafine structures image to an image process employing a plurality of form dependent filters corresponding to the forms of a plurality of microcalcifications to obtain a plurality of microcalcification enhanced images; and a detecting means for detecting, based on the microcalcification enhanced image data representing the plurality of microcalcification enhanced images obtained, the shadows of the microcalcifications.

Here, "ultrafine structures image" refers to an image which represents the ultrafine structure portions such as the noise, shadows of microcalcifications, and the like appearing in an image and which have been extracted therefrom. Further, the "ultrafine structures image obtaining means" refers to a means that obtains the ultrafine structures image from which the ultrafine structures have been extracted by use of a morphology computation, for example.

The referents of "form dependent filters corresponding to the form of the shadows of microcalcifications" include filters whose characteristics correspond to the geometrical data (characteristics), such as the concentration distribution, the size, the form, and the like of the microcalcifications shadows; any type of filter having characteristics within these defined limits can be employed thereas. For example, a plurality of types of form dependent filters can be prepared by creating a form dependent filter matched to each contrast for the contrast of every shadow of a microcalcification within a subject image. Likewise, a form dependent filter can be created for every size, that is, a form dependent filter matched to each specific size can be created for every size of shadow of a microcalcification within an image. Note that regarding the form dependent filter, it is preferable that a form dependent filter corresponding to the size and the brightness or concentration curve of the shadow of a microcalcification to be detected be employed thereas.

Further, the image process to be performed by use of the form dependent filter can be an enhancement process. The referents of "enhancement process" include: in a case, in which the object of a signal process is the concentration, that the concentration of the portions within the enhancement processed image representing shadows of microcalcifications is enhanced relative to that of the other portions within the enhancement processed image; and in a case in which the object of the signal process is the brightness, that the brightness of the portions within the enhancement processed image representing shadows of microcalcifications is enhanced relative to that of the other portions within the enhancement processed image. Within these limits, the process can be a process of intensifying the relative concentration or brightness of only the portion of the image representing shadows of microcalcifications, of the other portions of the image, or of both said portions of the image. For example, the concentration of only the portion of the image representing the microcalcifications shadows can be made denser, or the portions of the image other than those representing shadows of microcalcifications can be made less dense. In this manner, a microcalcifications enhanced image in which only the shadows of microcalcifications have been particularly enhanced can be obtained.

Still further, the detecting means of the anomalous shadow detection apparatus according to the present invention can be a means for detecting microcalcification shadows by use of a predetermined detection threshold value set for each of a plurality of microcalcification enhanced images.

In addition, the anomalous shadow detection apparatus according to the present invention, which is an anomalous shadow detection apparatus for detecting, based on the image data of a subject image, the microcalcification shadows within the subject image, may comprise: an ultrafine structures image obtaining means for obtaining an ultrafine structures image representing the ultrafine structures appearing in a subject image; a microcalcifications enhanced image obtaining means for subjecting the obtained ultrafine structures image to an image process employing at least one form dependent filter corresponding to the form of the shadow of a microcalcifications to obtain at least one microcalcification enhanced image; and a detecting means for detecting, based on the ultrafine structures image data representing the obtained ultrafine structures image and the microcalcification enhanced image data representing the obtained microcalcification enhanced image, the microcalcifications shadows.

Additionally, the detecting means of the anomalous shadow detection apparatus according to the present invention can be a means for detecting shadows of microcalcifications by use of a predetermined detection threshold value set for each of the ultrafine structures images and the microcalcification enhanced images.

Further, it is desirable that the predetermined detection threshold value to be set for the microcalcifications enhanced image be set based on the characteristics of the form dependent filter employed when said microcalcifications enhanced image was obtained.

Note that regarding the subject image, an image such as a radiation image of a human mammary gland can be used thereas.

According to the anomalous shadow detection apparatus of the present invention of the configuration described above: by subjecting an ultrafine structures image representing the ultrafine structures within a subject image to an image process employing a plurality of form dependent filters corresponding to the forms of the shadows of microcalcifications within the ultrafine structures image, a microcalcifications enhanced image, in which the shadows of microcalcifications matching the characteristics of a respective form dependent filter are enhanced and highlighted, can be obtained; further, by detecting the shadows of microcalcifications based on the image data representing the microcalcifications enhanced image, the detection rate of a variety of shadows of microcalcifications matching the characteristics of each respective form dependent filter can be improved. That is to say, by enhancing and highlighting the shadows of microcalcifications matching the respective characteristics of a plurality of form dependent filters, because it is possible to relatively suppress and separate other shadows (e.g., noise, linear components) that do not match the characteristics of the employed form dependent filters, the rate of detecting the microcalcifications shadows can be improved.

Note that the because the characteristics of the shadows of microcalcifications, which are enhanced in the microcalcifications enhanced image, differ according to the characteristics of the form dependent filter employed in the enhancement thereof, when detecting the shadows of microcalcifications based on the image data representing a microcalcifications enhanced image, if the detection threshold value is a value that is to be set (optimized) for each microcalcifications enhanced image, an improvement in the detection performance of the microcalcification shadows detecting process can be obtained.

Further, even if a configuration is adopted wherein the ultrafine structures image representing the ultrafine structures portion appearing within a subject image is subjected to an image process employing at least one form dependent filter, which corresponds to the shape of a shadow of a microcalcification, to obtain at least one microcalcifications enhanced image and the microcalcification shadows are detected based on the image data representing the ultrafine structures image and the image data representing the microcalcifications enhanced image, in comparison to the case in which the microcalcification shadows are detected based on only the image data representing the ultrafine structures image, or the case in which the microcalcification shadows are detected based on only one microcalcifications enhanced image data, the microcalcification shadows detection rate can be improved.

Still further, if the microcalcification shadows are detected employing a predetermined detection threshold value that is set for each ultrafine structures image and microcalcifications enhanced image, it becomes possible to set a threshold value matching the respective characteristics of each ultrafine structures image and microcalcifications enhanced image, leading to an improvement in detection performance.

Note that by setting, based on the characteristics of the form dependent filters employed when the microcalcifications enhanced image is obtained, the predetermined detection threshold value for each microcalcifications enhanced image, a thresholdvalue matching the characteristics of each respective microcalcifications enhanced image can be set.

## BRIEF DESCRIPTION OF THE DRAWINGS

Figure 1 is a schematic drawing of the configuration of an embodiment of the suspected anomalous shadow detection apparatus according to the present invention,
Figure 2 is a drawing of an image P' represented by subject image data P,
Figures 3A and 3B are diagrams of matched filters,
Figure 4 is a flowchart of the steps of the microcalcifications detection process according to the current embodiment,
Figures 5A, 5B, 5C and Figure 5D are diagrams each illustrating the concept of one of the basic processes of the morphology filtering operation,
Figure 6 is a diagram of four linear structuring elements B,
Figures 7A, 7B and 7C are graphs illustrating the signal values of anoriginal image, amicrocalcifications enhanced image, and a matched filter processed image, respectively, and
Figure 8 is a graph illustrating the relative relationship between the readout conditions (S value, L value) of the CR system and each threshold value.

## DESCRIPTION OF THE PREFERRED EMBODIMENTS

Hereinafter the preferred embodiments of the present invention will be explained with reference to the attached drawings. Fig. 1 is a schematic drawing of an anomalous shadow detection apparatus according to the current embodiment.

The anomalous shadow detection apparatus according to the current embodiment comprises: an ultrafine structures image obtaining means 10, into which image data P of a target subject (mammary glands) is inputted, for forming an ultrafine structures image data, which is an image data representing an image from which the ultrafine structures portions have been extracted from within the subject image represented by the subject image data P; a microcalcifications enhanced image obtaining means 20, into which the ultrafine structures image data formed by the ultrafine structures image obtaining means 10 is inputted, for forming, by use of two types of matched filters (form dependent filters), two sets of microcalcifications enhanced image data; and a detecting means 30, into which the ultrafine structures image data formed by the ultrafine structures image obtaining means 10 and the two sets of microcalcification enhanced image data formed by the microcalcifications enhanced image obtaining means 20 are inputted, for detecting, based on the three inputted image data, the microcalcification shadows in the image represented by the subject image data P.

Fig. 2 is a drawing of the image P' represented by the subject image data P. A plurality of microcalcification shadows $Q_1$, noise, linear components $Q_2$, and the like appear within the image. The anomalous shadow detection apparatus according to the current embodiment is an anomalous shadow detection apparatus for detecting the microcalcifications $Q_1$ within the image.

Further, Figs. 3A and 3B are graphs showing the two matched filters used by the microcalcifications enhanced image obtaining means 20. These graphs of the two matched filters show the form of the microcalcification shadows and the concentration curve, respectively, and the same graphs also show the relationship between the concentration ratio "highest concentration value/microcalcifications shadows concentration value" obtained for the main and subscanning directions at each pixel position.

The first matched filter shown in Fig. 3A (hereinafter referred to as matched filter A) is a matched filter configured so as to conform to the shape, etc., of a typical unclear microcalcification shadow; wherein the concentration ratio at the center point of the microcalcification shadow is comparatively small (approximately 0.2 in the graph), and is formed having a broad base field (approximately 5 x 5 pixels in the graph) . Further, the second matched filter shown in Fig. 3B (hereinafter referred to as matched filter B) is a matched filter configured so as to conform to the shape, etc., of a typical microcalcification shadow; wherein the concentration ratio at the center point of the microcalcification shadow is comparatively large (approximately 0.55 in the graph), and is formed having a narrow base field (approximately 2 x 2 pixels in the graph). By utilizing these matched filters, the microcalcifications enhanced image obtaining means 20 forms microcalcifications enhanced image data representing a microcalcifications enhanced image in which the microcalcification shadows having the same characteristics as each of the matched filters are enhanced and highlighted within the image.

Note that regarding the form dependency of the matched filters, the forms shown in Figs. 3A and 3B can be employed. That is to say, filter parameters can be set so that the concentration of the shadow portions (that is, the suspected microcalcification portions) having the degree of concentration distribution shown in each of the graphs 3a and 3b is relatively enhanced. Specifically, a two dimensional filter indicated in Chart 1 may be utilized for Figure 3A, and a two dimensional figure indicated in Chart 2 may be utilized for Figure 3B, for example.

| Chart 1 | | | | |
|---|---|---|---|---|
| 0.01 | 0.06 | 0.08 | 0.06 | 0.01 |
| 0.04 | 0.12 | 0.17 | 0.12 | 0.04 |
| 0.07 | 0.15 | 0.22 | 0.15 | 0.07 |
| 0.04 | 0.12 | 0.17 | 0.12 | 0.04 |
| 0.01 | 0.06 | 0.08 | 0.06 | 0.01 |

| Chart 2 | | | | |
|---|---|---|---|---|
| 0.00 | 0.00 | 0.07 | 0.00 | 0.00 |
| 0.00 | 0.07 | 0.13 | 0.07 | 0.00 |
| 0.07 | 0.13 | 0.60 | 0.13 | 0.07 |
| 0.00 | 0.07 | 0.13 | 0.07 | 0.00 |
| 0.00 | 0.00 | 0.07 | 0.00 | 0.00 |

The detecting means 30 utilizes the detection threshold values, which have been specifically set for each set of image data, to perform the detection process on the three sets of image data inputted thereto. Note that the detection threshold value for each specific image data have been set at the detecting means 30 in advance.

Next, the operation of the anomalous shadow detection apparatus according to the current embodiment as described above will be explained. Fig. 4 is a flowchart of the steps of the anomalous shadow detection process according to the anomalous shadow detection apparatus of the current embodiment.

When the subject image data P obtained by a CR system is inputted to the ultrafine structures image obtaining means 10, the ultrafine structures image obtaining means 10 forms, by use of a morphology filtering process, an ultrafine structures image (step S10). The thus formed ultrafine structures image is an image formed in the course of performing, utilizing a morphology computation, a microcalcification shadows detection process (a morphology filtering process). Hereinafter, the method of forming an ultrafine structures image by use of morphology filters will be explained in more detail.

Basic Morphology Computation

A morphology computation process o generally consists of a series of set operations in an N-dimensional space. However, the process explained hereunder is directed to a two-dimensional monotone image for the sake of simplicity.

The two-dimensional monotone image is regarded as a three-dimensional space constituted of a certain number of coordinate points, (x, y), having respective heights corresponding to an image concentration value f(x, y) thereof. In the present description, high brightness high signal level signals are to be used, wherein the image signals are of a greater value as the concentrations thereof are lower (having higher brightness when displayed on a CRT screen).

Now, for further simplicity, a linear function f(x) corresponding to the image concentration signal along a strip of the image will be considered. A structuring element g used in the morphology computation is a symmetric function with respect to the zero-point, i.e.,

$$g^S(x) = g(-x) \quad (1)$$

Wherein the value is equal to 0 within a defined domain, said domain being:

$$G = \{-m, -m+1, \cdots, -1, 0, 1, \cdots, m-1, m\} \quad (2)$$

Using the above structuring element g, basic forms of morphology operations can be written in quite simple forms as shown below.

$$\text{dilation: } [f \oplus G^S](i) = \max\{f(i-m), \cdots, f(i), \cdots, f(i+m)\} \quad (3)$$

$$\text{erosion : } [f \ominus G^S](i) = \min\{f(i-m), \cdots, f(i), \cdots, f(i+m)\} \quad (4)$$

$$\text{opening : } f_g = (f \ominus g^S) \oplus g \quad (5)$$

$$\text{closing : } f^g = (f \oplus g^S) \ominus g \quad (6)$$

That is to say, the dilation operation is an operation of searching for the maximum value within a width range of ±m (a value determined by structural element B), centered on a pixel of interest (see Figure 5A). On the other hand, the erosion operation is an operation of searching for the minimum value within a width range of ±m centered on a pixel of interest (see Fig. 5B). Further, the opening operation is an operation of searching for the minimum value first and then searching for the maximum value; the closing operation is an operation of searching for the maximum value first and then searching for the minimum value. More specifically, the opening operation smoothes the image concentration distribution on the low-brightness side thereof to filter out up-pointing peaks, (i.e., those parts with higher brightness and thus lower image concentration than adjacent areas thereof) which occur within a range spatially narrower than the present example (see Fig. 5C). The mask size is 2m in the present example. On the other hand, the closing operation smoothes the image concentration distribution on the high-brightness side thereof to filter out down-pointing peaks (i.e., those parts with lower brightness and thus higher image concentration than adjacent areas thereof) which occur within a range spatially narrower than a mask size of 2m (see Fig. 5D).

For cases in which the image signal f (x, y) of higher level represents higher image concentration, because the size relationship between the image concentration value f(x) and the image signal would be reversed from the converse case, in which the higher the brightness the higher the signal level, the dilation operation would be the operation identical to the above-described erosion operation (see Fig. 5B) and the erosion operation wouldbe the operation identical to the above-described dilation operation (see Fig. 5A). Similarly, the opening operation wouldbe the operation identical to the above-described closing operation (see Fig. 5D) and the closing operation would be the same operation identical to the above-described opening operation (see Fig. 5C). In the following descriptions, however, as well as in the above description of the morphology filtering process, the image concentration signal f(x, y) of higher level is assumed to represent higher brightness.

Application to Microcalcification Shadow Detection

There has been a conventional subtraction method for detecting a calcification shadow in which a smoothed image is subtracted from an original image. However, a simple smoothing method is incapable of precisely distinguishing a calcification shadow from an elongated normal shadow (e.g., a shadow of a mammary gland, a mammary gland support tissue, a blood vessel, etc.). To overcome this problem a morphology operation represented by the following equation (7), which is based on an opening operation using a multiple structuring elements, was proposed in "Extraction of Microcalcifications Using Morphological Filter with Multiple Structuring Elements" (Electronic Information Communication Society Journal, D-II, Vol. J75-D-II, No. 7, p. 1170-1176, 7/1992) and "Basics of Morphology Operation and its Application to Mammogram" (Medical Imaging Technology, Vol. 12 No. 1, 1/1994).

$$P = f - \max_{i \in (1, \cdots, M)} \{(f \ominus Bi) \oplus Bi\} = f - \max_{i \in (1, \cdots, M)} \{f_{Bi}\} \qquad (7)$$

In the above equation (7), Bi (i = 1, 2, 3, 4) represents the four linear structuring elements B as shown in Fig. 6. If lines longer than respective dimensions of the target calcification shadow are set as the linear dimensions Bi and the opening operation performed, the target calcification shadow will be regarded as an up-pointing peak of the image concentration signal which is narrower in each direction corresponding to each Bi than the structuring element B and thus will be filtered out. On the other hand, an elongated normal shadow, which usually has a dimension longer than that of structuring element B in one or more directions corresponding to directions of Bi, still remains after the opening operation (i.e., the operation represented by the second term of the equation (7)). Accordingly, an image containing only those shadows strongly suspected to be calcification shadows will be derived by subtracting the smoothed image, which is obtained through the opening operation and contains no ultrafine structures, from an original image f.

Note that for cases in which the image concentration signal f (x), y) of higher level represents higher image concentration, i.e., where the closing operation is used in place of the opening operation, the following equation (8) may substitute for the equation (7).

$$P = f - \min_{i \in (1, \cdots, M)} \{(f \oplus Bi) \ominus Bi\} = f - \min_{i \in (1, \cdots, M)} \{f_{Bi}\} \qquad (8)$$

The images obtained according to the formula (7) or (8), that is to say, the image data representing a smoothed image obtained by eliminating the ultrafine structures from the original image, and the image data representing the differential image of the original image are ultrafine structures image data $P_s$.

When the ultrafine structures image data $P_s$ has been formed by the ultrafine structures image obtaining means 10, the ultrafine structures image data $P_s$ is inputted to the microcalcifications enhanced image obtaining means 20. Utilizing a matched filter A and a matched filter B, the microcalcifications enhanced image obtaining means 20 forms respective microcalcifications enhanced images $P_a$, $P_b$ (steps S21, S22). Figs. 7A, 7B and 7C are graphs illustrating the operation of enhancing, by use of matched filters, the specified signal portions (shadows having the same characteristics as the respective matched filter) within a ultrafine structures image to obtain a microcalcifications enhanced image data (enhancement processed image data). The matched filter A shown in Fig. 3A is used in step S21, wherein the unclear microcalcification shadows within the image represented by the ultrafine structures image data $P_s$ are enhanced and highlighted to obtain a microcalcifications enhanced image data $P_a$. The matched filter B shown in Fig. 3B is used in step S22, wherein the typical microcalcification shadows within the image represented by the ultrafine structures image data $P_s$ are enhanced and highlighted to obtain a microcalcifications enhanced image data $P_b$.

When the microcalcifications enhanced image data $P_a$, $P_b$ have been formed by the microcalcifications enhanced image obtainingmeans 20, ultrafine structures image data $P_s$ is inputted to the detecting means 30 from the ultrafine structures image obtaining means 10 and the microcalcifications enhanced image data $P_a$, $P_b$ are inputted to the detecting means 30 from the microcalcifications enhanced image obtaining means 20; the detecting means 30 then performs the respective particular microcalcification shadow detection processes on each inputted image data (steps S31, S32, S33).

That is to say, in step S33, using the ultrafine portion data based on the morphology computation of the formula (9) shown below, the shadows not cast by microcalcifications (normal shadows) are eliminated from the ultrafine struc-

tures image data $P_s$ (P of formula (7)).

$$M_{grad} = (1/2) \times \{f \oplus \lambda B - f \ominus \lambda B\} \quad (9)$$

Here, as a spot having a larger value of Mgrad is more likely to be a calcification shadow, a suspected calcifications image represented by suspected calcifications image data $C_s$ can be obtained using the formula (10) shown below.

$$\text{If } P(I, j) \geq T1 \text{ and } Mgrad(I, j) \geq T2$$

$$\text{Then } Cs(I,j) = P \text{ else } Cs(I,j) = 0 \text{ (10)} \quad (10)$$

Note that in the above equation (10), T1 and T2 represent empirically determined preset threshold values.
In the same manner: in step S31, the normal shadows included in the microcalcifications enhanced image data $P_a$ can be eliminated therefrom by use of formula (9), and utilizing the threshold values A1, A2, suspected calcifications image data $C_a$ can be obtained by the formula (10); and in step S32 the normal shadows included in the microcalcifications enhanced image data $P_b$ can be eliminated therefrom by use of formula (9), and by utilizing the threshold values B1, B2, suspected calcifications image data $C_b$ can be obtained by the formula (10).
However, for cases in which the size of the normal shadow is different from that of the target calcification shadow, because the normal shadow can be eliminated by performing only a comparison of the P of the equation (7) and the predetermined threshold value T1 (or A1, B1), it is sufficient that only the first criterion of the equation (10) (P (i, j) ≥T1) be satisfied for cases in which there are no normal shadows having the same size as the target calcification shadow remaining.
Here, the method of setting the threshold value for each of the image data will be explained. When the threshold values are to be set for each of the image data, the threshold value setting method, based on the readout sensitivity (an S value) and the latitude (an L value) of the subject image data P, proposed in Japanese Unexamined Patent Publication No. 8(1996)-263648 is employed. That is to say, the subject image data obtained by the CR system is a signal value obtained by adjusting the readout conditions (S value, L value) by way of the EDR; the radiation quantum noise contained in the radiation image is included in this signal value. Therefore, although the size of the image data relating to the quantum noise component also fluctuates, corresponding to the adjustment of the readout conditions by the EDR, if the threshold values are set according the aforementioned method proposed in Japanese Unexamined Patent Publication No. 8(1996)-263648, the effect of said fluctuations is mitigated, and highly accurate detection results can be obtained.

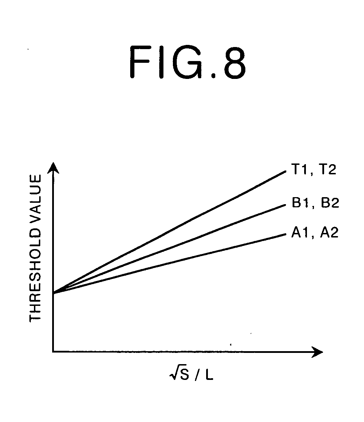

Fig. 8 is a graph illustrating the relationship between the readout conditions (S value, L value) and each threshold value. As shown in Fig. 8, each of the threshold values is set as a proportionately large value corresponding to the highness of the readout sensitivity value, and/or the smallness of the latitude. Further, although the relationship between each threshold value is shown in Fig. 8, if, for example, the matched filter A is used with the aim of enhancing an unclear microcalcification shadow, because the noise becomes difficult to enhance (the enhancement does not depend on the noise quantity), the threshold value for the microcalcifications enhanced image data $P_a$ is a smaller value than the other threshold values. That is to say, the threshold values for the microcalcifications enhanced image data $P_a$, $P_b$, which have been obtained using the matched filters A, B, are set, based on the characteristics of said respective matched filters, as shown in Fig. 8.
Finally, in step S34, the sum of the three suspected calcifications image data $C_a$, $C_b$, and $C_s$ obtained in steps S31, S32 and S33 is calculated, and a calcifications image data C representing the microcalcification shadows detection results.
Note that as described above, the explanation relating to the morphology computation has been conducted for a case in which high-brightness, high signal level image data has been the subject of processing, however, for cases in which the image data to be processed is high-concentration, high signal level image data (image data having higher digital values as the concentration of the pixels are higher), the relationship between the opening computation and the closing computation is reversed.
According to the anomalous shadows detection apparatus of the current embodiment, because a microcalcifications enhanced image data is formedutilizing amatched filter 8 modeled on the characteristics such as the form and the like of an unclear microcalcification shadow and a matched filter B modeled on the characteristics such as the form and the like of a typical microcalcification shadow, two types of microcalcification shadows are enhanced and highlighted, it becomes possible to relatively suppress other shadows such as noise, linear structures and the like, whereby the detection accuracy can be improved. In particular, although the possibility that these two types of microcalcification shadows will appear in a subject image is high, because the difficulty in separating the noise component from an unclear microcalcification shadow has made it difficult to detect unclear microcalcification shadows by use of a standard morphology filtering process; therefore, the anomalous shadow detection apparatus according to the present invention achieves an performance improvement in anomalous shadow detection processing by rendering it possible to accurately detect such unclear microcalcification shadows.

Further, when the threshold value is set for each image data, because the threshold value is optimized, based on the readout conditions of the subject image data and the characteristics of the matched filter applied thereto, for every image data, it becomes possible to set the threshold value at an appropriate level matched to the quantity of noise present in each image data, leading to an improvement in detection performance.

Note that according to the embodiment described above, although the threshold values T1, T2, A1, A2, B1, B2 have been set in advance at the detecting means 30, a threshold setting means for setting each threshold value can be provided; wherein the readout conditions (S value, L value) of the subject image data and the characteristics of the matched filters A, B can be inputted to the threshold value setting means, and the threshold value setting means can automatically set, based on the inputted readout conditions (S value, L value) of the subject image data and the characteristics of the matched filters A, B, at the detecting means 30.

Further, according to the embodiment described above, although an example wherein a suspected calcifications image data is formed based on each ultrafine structures image data and each microcalcifications enhanced image data, for every image data, the sum of said formed suspected calcifications image data is obtained, and an image data (suspected calcifications image data C) representing the microcalcification shadows detection results is formed has been proffered, according to the anomalous shadows detection apparatus of the present invention, methods for obtaining the microcalcification shadows detection results are not limitedto theabove-describedembodiment; each suspected calcifications image data can be a detection results image data, and further, the detection results image data can be an image data formed of only the microcalcification shadows representing a higher malignancy, which have been extracted from each suspected calcifications image data.

Still further, according to the embodiment described above, although an example has been proffered wherein two types of matched filters are employed to obtain two microcalcifications enhanced image data, which are then combined with an ultrafine structures image data to obtain a total of three suspected calcifications image data, the anomalous shadows detection apparatus according to the present invention is not limited thereto; an embodiment wherein the ultrafine structures image data is not used, and two or more types of microcalcification enhanced image data are used to obtain two or more suspected calcifications image data, for example, is also possible.

Note that the present invention is not limited to being used for mammography CAD applications; the present invention can be applied to chest CAD and the like, and various types of subjects of imaging.

## Claims

1. An anomalous shadow detection apparatus for detecting, based on the image data representing a subject image, the microcalcification shadows within said subject image, comprising:

   an ultrafine structures image obtaining means for obtaining an ultrafine structures image representing the ultrafine structures appearing in a subject image,
   a microcalcifications enhanced image obtaining means for subjecting said ultrafine structures image to an image process employing a plurality of form dependent filters corresponding to the forms of a the of microcalcifications to obtain a plurality of microcalcification enhanced images, and
   a detecting means for detecting, based on the microcalcification enhanced image data representing said obtained plurality of microcalcification enhanced images, the microcalcifications shadows.

2. An anomalous shadow detection apparatus as defined in claim 1, wherein
   said detecting means is a means for detecting, by use of a predetermined detection threshold value set for each of the plurality of microcalcification enhanced images, the microcalcifications shadows.

3. An anomalous shadow detection apparatus for detecting, based on the image data representing a subject image, the microcalcification shadows within said subject image,
   an ultrafine structures image obtaining means for obtaining an ultrafine structures image representing the ultrafine structures appearing in a subject image, a microcalcifications enhanced image obtaining means for subjecting said ultrafine structures image to an image process employing at least one form dependent filter corresponding to the form of the microcalcifications shadows to obtain at least one microcalcification enhanced image,

and

a detecting means for detecting, based on the ultrafine structures image data representing the obtained ultrafine structures image and the microcalcification enhanced image data representing the obtained microcalcification enhanced image, the microcalcifications shadows.

**4.** An anomalous shadow detection apparatus as defined in claim 3, wherein

said detecting means is a means for detecting, by use of a predetermined detection threshold value set for each of the ultrafine structures images and the microcalcification enhanced images, microcalcifications shadows.

**5.** An anomalous shadow detection apparatus as defined in any of claims 2, 3, or 4, wherein

the predetermined detection threshold value set for the microcalcifications enhanced image is set based on the characteristics of the form dependent filter employed when said microcalcifications enhanced image was obtained.

FIG.1

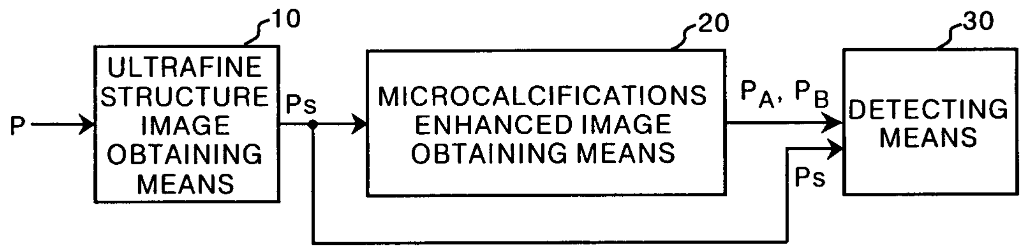
10
ULTRAFINE STRUCTURE IMAGE OBTAINING MEANS
P
Ps
20
MICROCALCIFICATIONS ENHANCED IMAGE OBTAINING MEANS
PA, PB
30
DETECTING MEANS
Ps

FIG.2

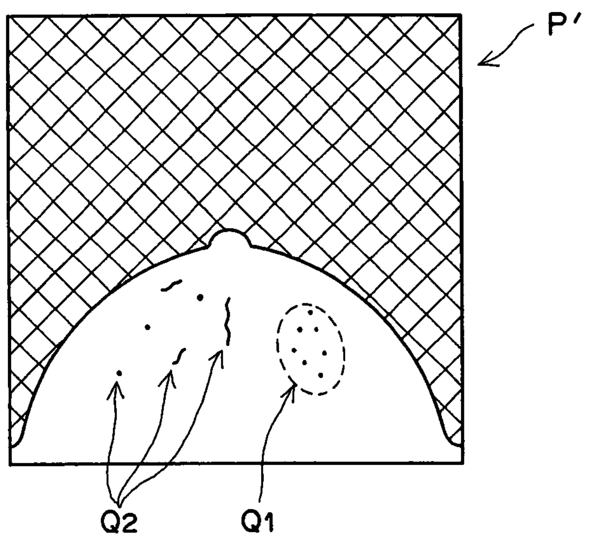

FIG.3A

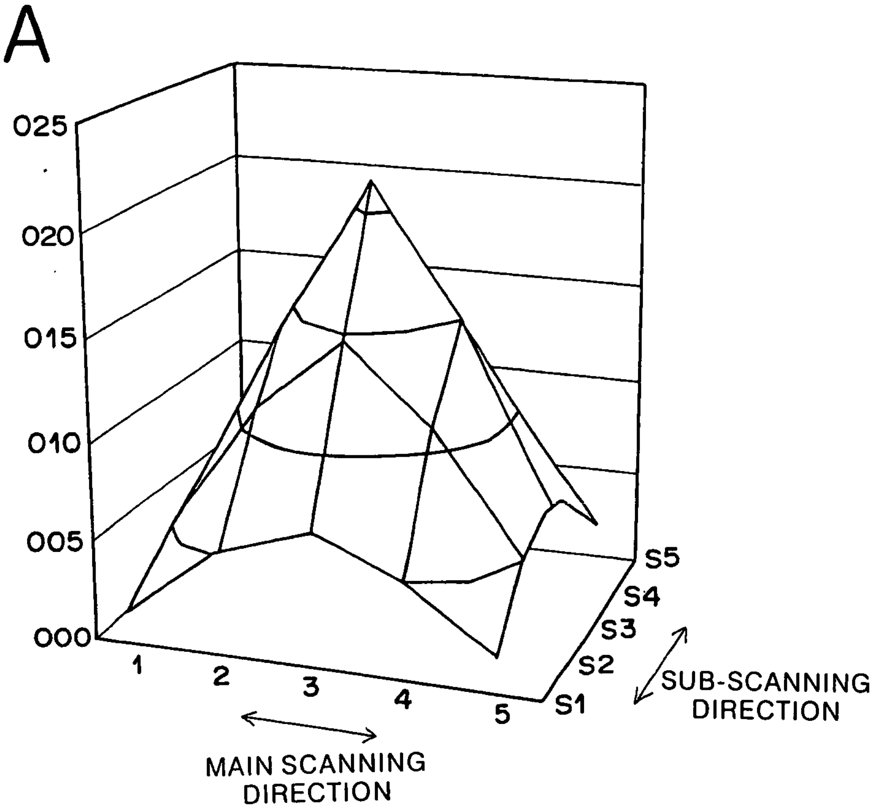
025
020
015
010
005
000
1
2
3
4
5
S1
S2
S3
S4
S5
MAIN SCANNING DIRECTION
SUB-SCANNING DIRECTION

FIG.3B

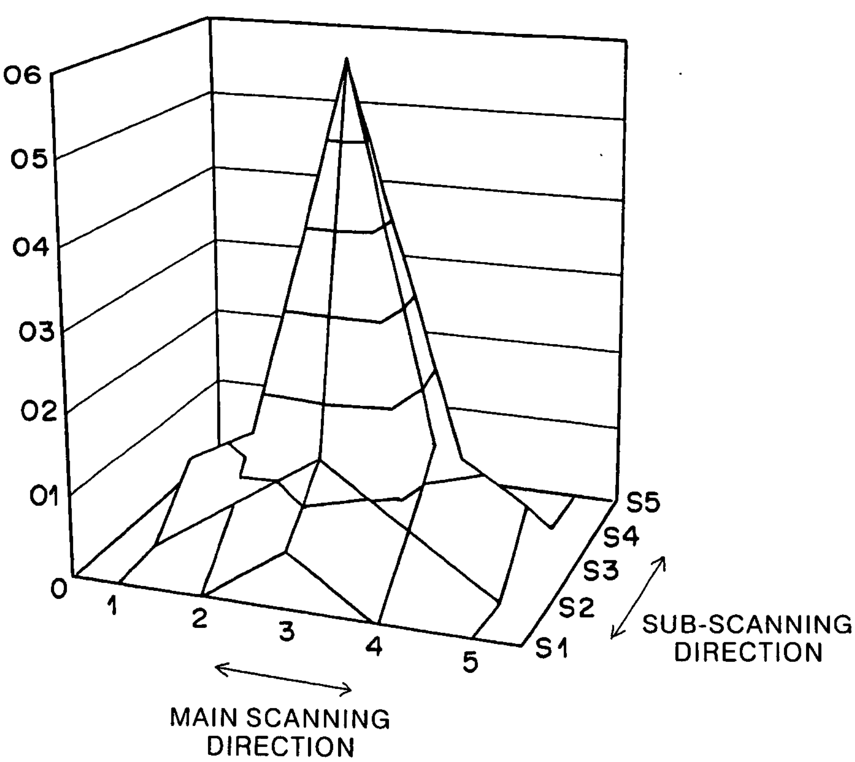
06
05
04
03
02
01
0
1
2
3
4
5
S1
S2
S3
S4
S5
MAIN SCANNING DIRECTION
SUB-SCANNING DIRECTION

FIG.4

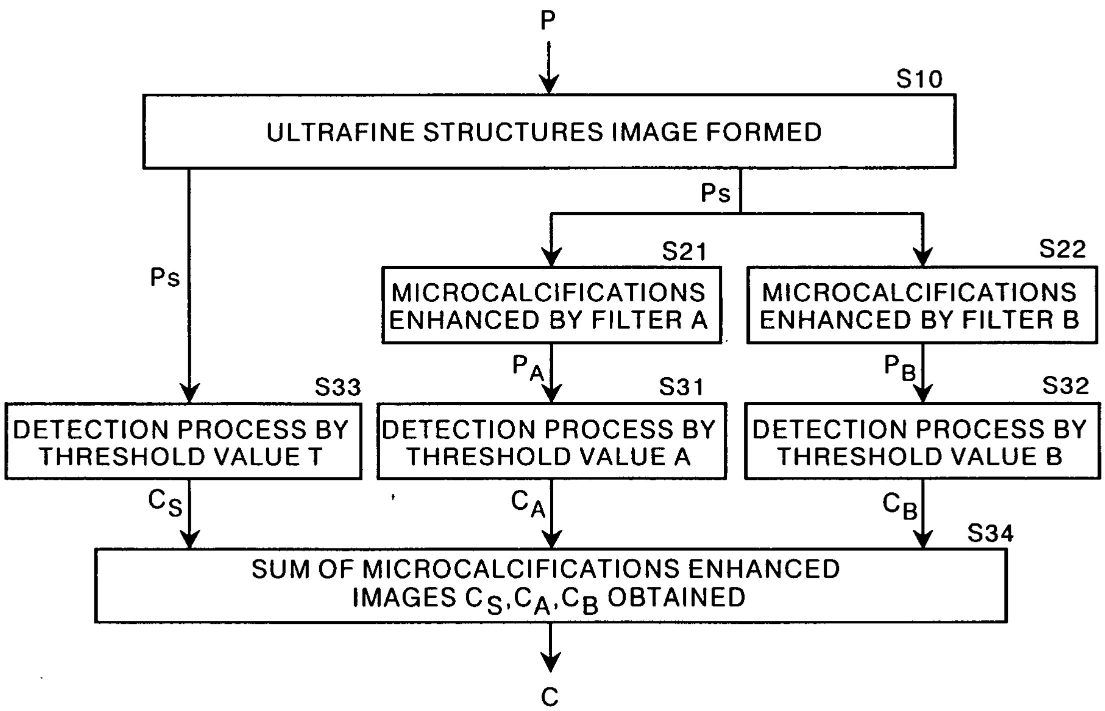
P
S10
ULTRAFINE STRUCTURES IMAGE FORMED
Ps
Ps
S21
MICROCALCIFICATIONS ENHANCED BY FILTER A
S22
MICROCALCIFICATIONS ENHANCED BY FILTER B
PA
PB
S33
DETECTION PROCESS BY THRESHOLD VALUE T
S31
DETECTION PROCESS BY THRESHOLD VALUE A
S32
DETECTION PROCESS BY THRESHOLD VALUE B
CS
CA
CB
S34
SUM OF MICROCALCIFICATIONS ENHANCED IMAGES CS,CA,CB OBTAINED
C

FIG.5A

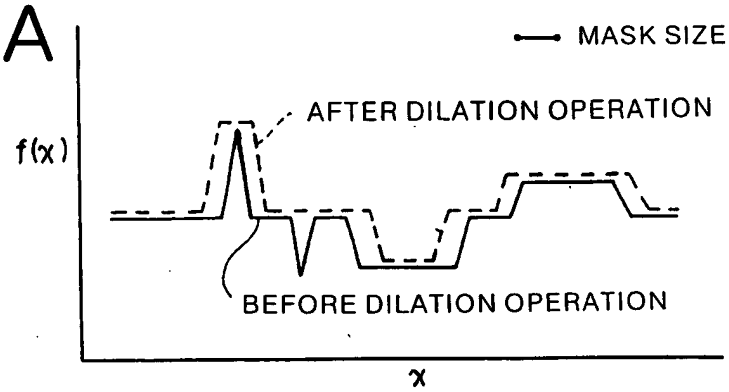


FIG.5B

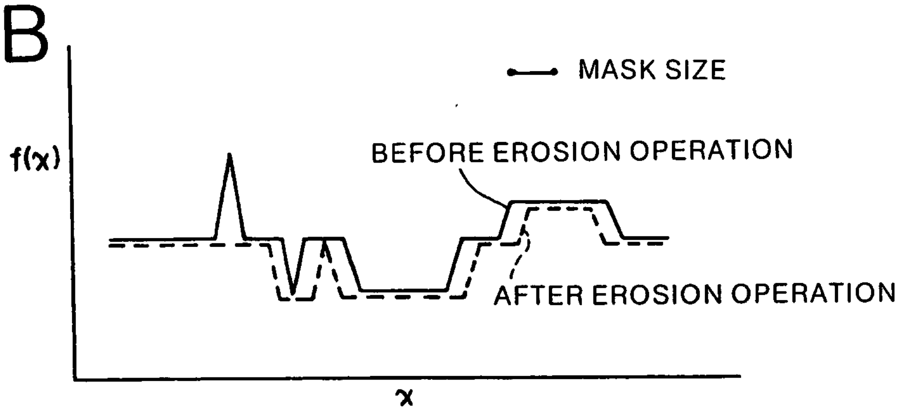


FIG.5C

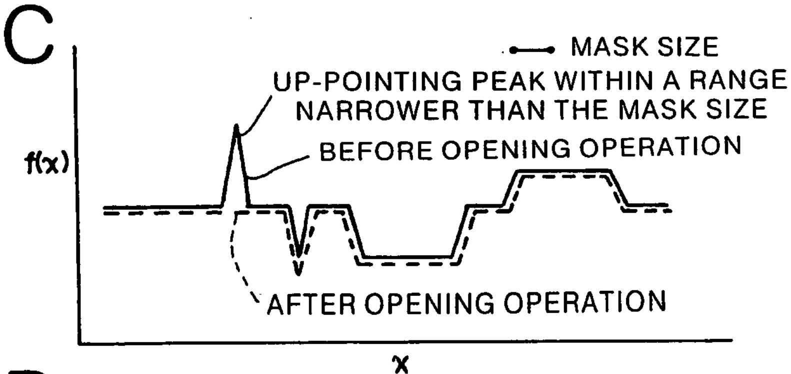


FIG.5D

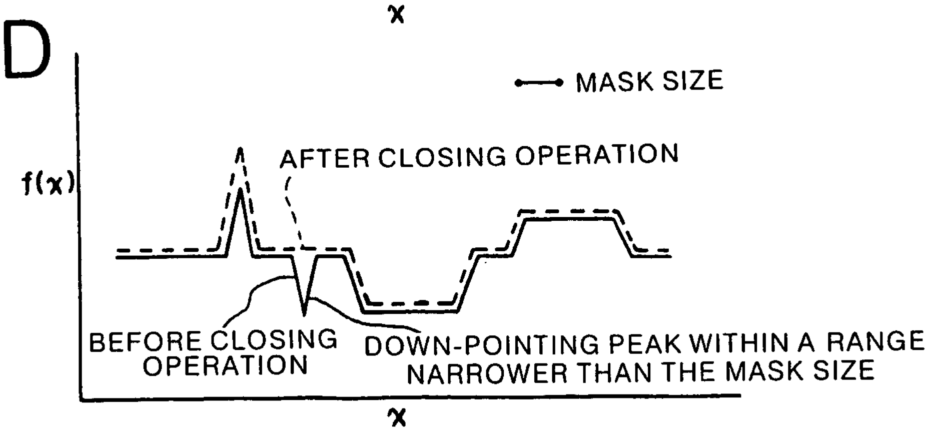

FIG.6

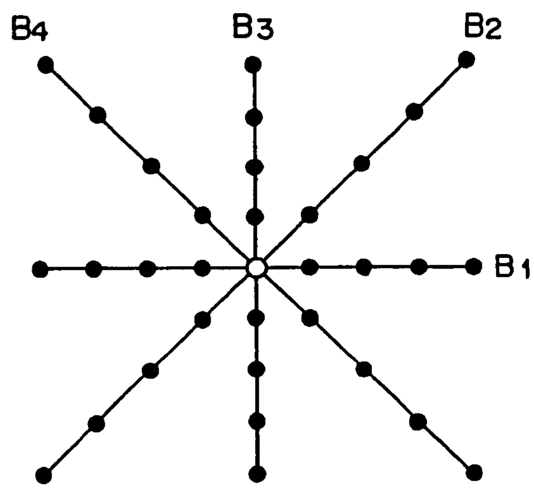

FIG.7A

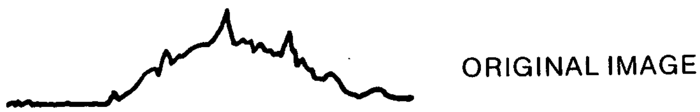


FIG.7B

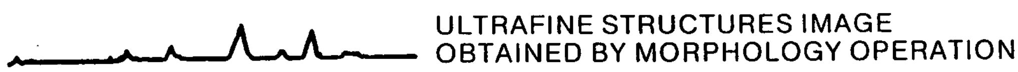


FIG.7C

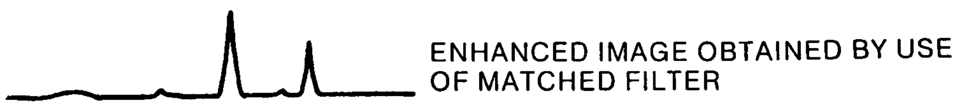

FIG.8